(19) Europäisches Patentamt
European Patent Office
Office européen des brevets

(11) **EP 2 454 807 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
***H02M 3/337*** (2006.01) ***H02M 1/34*** (2007.01)

(21) Anmeldenummer: **10734093.7**

(22) Anmeldetag: **12.07.2010**

(86) Internationale Anmeldenummer:
**PCT/EP2010/059969**

(87) Internationale Veröffentlichungsnummer:
**WO 2011/006861 (20.01.2011 Gazette 2011/03)**

(54) **STÖRUNGSARME SPANNUNGSVERSORGUNG**

LOW-INTERFERENCE POWER SUPPLY

ALIMENTATION EN COURANT À FAIBLES PERTURBATIONS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.07.2009 DE 102009032980**

(43) Veröffentlichungstag der Anmeldung:
**23.05.2012 Patentblatt 2012/21**

(73) Patentinhaber: **Siemens Aktiengesellschaft 80333 München (DE)**

(72) Erfinder:
- **JAKOB, Holger**
  **89150 Machtolsheim (DE)**
- **LINZMAIER, Klaus-Peter**
  **73650 Winterbach (DE)**
- **ULRICH, Burkhard**
  **72348 Rosenfeld (DE)**

(56) Entgegenhaltungen:
EP-A2- 0 408 253    EP-A2- 0 881 759
EP-A2- 1 679 783    DE-A1- 19 724 931
US-A- 4 794 506    US-A1- 2005 030 778
US-B1- 6 246 599

- **Graham Holmes, Thomas Lipo: "Pulse Width Modulation For Power Converters Principles and Practice", 2003, Wiley & Sons, New York, XP002625919, ISBN: 0-471-20814-0 Seiten 17-19, Kapitel 1.4.2, S. 17-19**
- **Ned Mohan, Tore Undeland, William Robbins: "Power Electronics: Converters, Applications, and Design", 1989, Wiley & Sons, New York, XP002625920, ISBN: 0-471-50537-4 Kapitel 2-10; 20-11-3; 20-11-4; 20-11-5; 20-12; 21-8; 21-9; Seiten: 20; 527-533; 565-566**
- **VISHWANATHAN N ET AL: "High voltage dc power supply topology for pulsed load applications with converter switching synchronized to load pulses", POWER ELECTRONICS AND DRIVE SYSTEMS, 2003. PEDS 2003. THE FIFTH INTERN ATIONAL CONFERENCE ON SINGAPORE 17-20 NOV. 2003, PISCATAWAY, NJ, USA,IEEE, PISCATAWAY, NJ, USA, Bd. 1, 17. November 2003 (2003-11-17), Seiten 618-623, XP010695315, DOI: DOI:10.1109/PEDS.2003.1282930 ISBN: 978-0-7803-7885-8**

EP 2 454 807 B1

**Beschreibung**

Die Erfindung betrifft eine Schaltungsanordnung mit zumindest einem Transformator mit einer Primär- und einer Sekundärwicklung, wobei die Primärwicklung über eine Vollbrückenschaltung mit zwei Brückenzweigen an eine Eingangsspannung anschließbar ist, wobei die Vollbrückenschaltung vier Schaltelemente mit jeweils einer Schaltentlastung sowie in Reihe zum Transformator geschaltet einen Kondensator und eine Spule aufweist, wobei über die Sekundärwicklung und über zumindest zwei Dioden und einen Ausgangskondensator zumindest eine Ausgangsspannung abgreifbar ist und wobei die Ausgangsspannung über eine Phasenverschiebung der zwei Brückenzweige regelbar ist, wobei zwischen der Sekundärwicklung (3) und dem zumindest einen Ausgangskondensator ($C_F$, $C_{F2}$) zumindest eine Umschwingkapazität ($C_{R2}$, $C_{R3}$, $C_{R4}$) angeordnet ist, wobei zur Reduzierung von hochfrequenten Störanteilen in der Ausgangsspannung ($U_{A1}$, $U_{A2}$) die in Reihe zum Transformator (TR) geschaltete Spule ($L_R$) als Oberschwingungsdrossel ausgeführt ist.

Die Erfindung betrifft weiter ein Verfahren zur Erzeugung einer Ausgangsspannung, eine Steuerung für eine gattungsgemäße Schaltungsanordnung und ein Schaltnetzteil.

Ein derartiges Verfahren bzw. derartige Komponenten kommen generell auf dem Gebiet der Spannungsversorgung zum Einsatz und insbesondere, wenn die Bereitstellung einer möglichst störungsarmen Versorgungsspannung für sensible Verbraucher wie z.B. elektronische Baugruppen zur Analogwerterfassung in messtechnischen Anwendungen, der Medizintechnik etc. gewünscht ist. Ein spezielles technisches Problem ist, dass gerade bei messtechnischen Aufgaben mit sehr hohen Genauigkeiten die zur Störreduzierung eingesetzten Maßnahmen oftmals zur Folge haben, dass die Störaussendung des Netzteiles nicht mehr deterministisch ist. Die Qualität der Versorgungsspannung, die durch das Netzteil bereitgestellt wird, ist entscheidend für die erzielbare Messgenauigkeit. Insbesondere sind hochfrequente Störungen problematisch, die einerseits direkt das Messsignal beeinflussen können und andererseits auch über die Versorgungsspannung der analogen Messwerterfassung und eines A/D-Wandlers eine fehlerhafte Messwerterfassung verursachen. Ein Problem ist insbesondere die begrenzte Gleichtaktunterdrückung der Versorgungsspannung der Messverstärker bei hoher Frequenz.

Als Netzteile werden üblicherweise im großen Umfang Schaltnetzteile eingesetzt. Allerdings haben Schaltnetzteile nach dem Stand der Technik den Nachteil einer relativ hohen Störaussendung aufgrund der zur Energieübertragung nötigen Schaltvorgänge. Werden besonders hohe Anforderungen z.B. bzgl. der elektromagnetischen Störaussendung oder eine geringe Verlustleistung gefordert, so werden entweder zusätzliche Filtermaßnahmen an den Ein- und Ausgängen vorgenommen oder es werden vorteilhaft Resonanzwandler eingesetzt (auch in Kombination mit Filtermaßnahmen).

Beispielsweise weist ein multiresonanter Halbbrückenwandler auf der Primärseite des Transformators zwei Schaltelemente (Transistoren) und einen Resonanzkreis aus einem Kondensator, einer Spule und der Streuinduktivität des Transformators sowie auf der Sekundärseite zu den gleichrichtenden Dioden parallel geschaltete Kondensatoren auf. Beide Transistoren werden mit einem Tastverhältnis von <50% der Periodendauer symmetrisch (d.h. mit gleichen Einschaltzeiten) angesteuert. Die Regelung der Ausgangsspannung erfolgt hierbei durch Variation der Schaltfrequenz über die Änderung der frequenzabhängigen Eingangsimpedanz des Resonanzkreises.

Resonanzwandler können in transient- und/oder lastresonante Wandler eingeteilt werden. Zwar haben Resonanzwandler Vorteile hinsichtlich der Störaussendung und des Wirkungsgrades, allerdings können bei ihrem Betrieb folgende Probleme auftreten:

- Bei lastresonanten Wandlern, bei denen die Last entweder in Serie zu einem Resonanzkreis oder parallel zu einem der Elemente liegt, wie Serien-, Parallel- und Serien-Parallel-Resonanzwandlern erfolgt die Regelung über Frequenzmodulation. Daher lässt sich die Störaussendung mitunter schwerer vorhersagen und die Dimensionierung eines Ausgangsfilters wird erschwert. Eine vorteilhafte Synchronisation der Schaltfrequenz mit z.B. einer Abtastfrequenz eines A/D-Wandlers kann daher nicht erfolgen oder die Abtastrate wird lastabhängig.

- Bei transientresonanten Wandlern ist der Lastbereich, in dem ein schaltentlasteter Betrieb stattfinden kann, oftmals eingeschränkt. Das heißt, es ist mitunter nur für einen relativ kleinen Lastbereich ein störungsarmer und effizienter Betrieb möglich.

- Beide Arten von Resonanzwandlern haben zudem den Nachteil, dass zwar die Schalttransistoren entlastet werden, aber beispielsweise an der Transformator-Primär- und Sekundärseite sowie an den Dioden steile Spannungsflanken auftreten können.

Bekannt sind auch z.B. schaltentlastete Vollbrückenwandler mit Phase-Shift-Steuerung, d.h. Steuerung der Ausgangsspannung über die Phasendifferenz der beiden Brückenzweige des Vollbrückenwandlers. Verschiedene Wandler finden sich beispielsweise in den Schriften DE 695 10 874 T2, DE 10 2005 030 601 A1, B. Andreycak: "Phase shifted, zero voltage transition design considerations and the UC3875 PWM controller", Unitrode / Texas Instruments Application Note U-136A (1999) und B. Mammano: "Resonant Mode Converter Topologies - Additional topics", Unitrode Design Seminar SEM700, 1990, Topic 6 (2001). Aus US 6,246,599 B1 ist ein Wechselrichter bekannt, der mit konstanter Frequenz betrieben wird und ein Paar resonante Spulen aufweist. Die Ausgangsspannungsregelung wird durch eine Phasenverschiebung bei konstanter Frequenz erreicht.

Der Erfindung liegt die Aufgabe zugrunde, eine Schaltungsanordnung und ein Verfahren für ein Netzteil, insbesondere ein Schaltnetzteil, anzugeben, die unter Vermeidung der bekannten Nachteile die Anforderung nach einer geringen Störaussendung erfüllen.

Diese Aufgabe wird bei einer Schaltungsanordnung der eingangs genannten Art dadurch gelöst, dass jeder Brückenzweig zumindest einen Entlastungskreis mit zumindest einer Drossel und einem Kondensator aufweist.

Die Aufgabe wird weiter gelöst durch ein Verfahren zur Erzeugung einer Ausgangsspannung, durch eine Steuerung für eine Schaltungsanordnung sowie durch ein Schaltnetzteil mit den in den Ansprüchen 5, 9 bzw. 10 angegebenen Merkmalen.

Die erfindungsgemäße Lösung stellt eine Weiterentwicklung eines schaltentlasteten Vollbrückenwandlers oder eines multiresonanten Halbbrückenwandlers dar, die die Merkmale beider Wandler miteinander kombiniert (multiresonanter Wandler bei konstanter Frequenz). Zur Regelung der Ausgangsspannung wird die Phasenverschiebung der beiden Brückenzweige variiert, wodurch die Amplitude des Grundschwingungsanteils der resultierenden Wechselspannung geregelt wird. Aufgrund der frequenzselektiven Eingangsimpedanz des Resonanzkreises (bestehend aus in Serie zum Transformator geschaltetem Kondensator, Spule und Streuinduktivität des Transformators) kann hierdurch der Resonanzstrom, damit auch der Stromverlauf auf der Sekundärseite und letztlich auch die Ausgangsspannung geregelt werden.

Die Funktion der Umschwingkapazität ist, dass sie den Spannungsanstieg am Ausgangskondensator verlangsamt, indem sie den vom Lastnetzwerk eingeprägten Strom übernimmt, bis sie um den Wert der zweifachen Ausgangsspannung umgeladen wird, bevor die Spannung durch Einschalten der Dioden auf den Wert der Ausgangsspannung festgehalten wird. Ein weiterer Vorteil ist, dass die Dioden wie bei einem lastresonanten Wandler aufgrund der Stromeinprägung durch den Resonanzkreis mit definiertem dI/dt ausschalten.

Die erfindungsgemäße Lösung weist eine transiente Schaltentlastung aller Transistoren und Dioden auf bei gleichzeitiger Erzielung der Bedingung für die Schaltentlastung bei konstanter Frequenz und symmetrischer Ansteuerung zweier Halbbrückenzweige (Regelung über Phasenverschiebung zweier Halbbrücken bzw. Brückenzweige).

Aus der Kombination der Eigenschaften eines transientresonanten Wandlers mit denen eines lastresonanten Wandlers ergibt sich der weitere Vorteil, dass die Variation der Spannung im Gegensatz zu lastresonanten Wandlern bei konstanter Frequenz erfolgen kann. Durch die Nutzung einer konstanten Schaltfrequenz des Netzteils sind die Störungen der Stromversorgung deterministisch. Zudem ergibt sich ein vorhersagbares Störaussendungsspektrum, da die Ansteuerung bei konstanter Frequenz erfolgt und die Flankensteilheiten an allen Transistoren über die (für Wechselstrom effektiv) parallel zu den Leistungshalbleitern angeordneten Kapazitäten einstellbar sind. Zudem ist die Stromsteilheit aufgrund des lastresonanten Aufbaus begrenzt.

Der schaltentlastete Betrieb aller Leistungshalbleiter bei konstanter Frequenz vermeidet die Generation von hochfrequenten Oberschwingungen (Schaltspitzen), wie sie z.B. bei hart schaltenden Wandlern auftreten können.

Insgesamt lässt sich durch den erfindungsgemäßen Aufbau ein Schaltnetzteil realisieren, welches sich durch sehr geringe Störaussendungen auszeichnet, da alle kritischen Strom- und Spannungssteilheiten durch die Dimensionierung eingestellt werden.

In einer vorteilhaften Form der Ausgestaltung ist jeweils eine Umschwingkapazität zu den zumindest zwei Dioden parallel geschaltet.

In einer weiteren vorteilhaften Ausführungsform weist jeder Brückenzweig zumindest einen Entlastungskreis mit zumindest einer Drossel und einem Kondensator auf. Hierdurch können bei konstanter Betriebsfrequenz und Einschaltzeit die Drosseln so dimensioniert werden, dass der in diesen fließende Blindstrom (dieser hat einen dreieck- bzw. trapezförmigen Verlauf) ausreichend ist, um die parallel zu den Schaltern angeordneten Kapazitäten auch dann umzuladen, falls kein oder nur ein sehr geringer Laststrom fließt. Dies ist bei frequenzmodulierten Wandlern üblicherweise nur mit Einschränkungen möglich.

In einer weiteren vorteilhaften Ausführungsform ist zwischen dem Ausgangskondensator und mit der Ausgangsspannung beaufschlagten Ausgängen zumindest ein Ausgangsfilter aus zumindest einer Spule und zumindest einem Kondensator geschaltet, um Gegentaktstörungen am Ausgang zu reduzieren. Auf diese Weise lässt sich eine weitere Verbesserung durch weitere Filtermaßnahmen erreichen, wobei der zusätzliche Filter aufgrund der konstanten Schaltfrequenz dabei einfacher ausgelegt werden kann als bei Wandlern, bei denen die Regelung über Frequenzvariation erfolgt.

In einer weiteren vorteilhaften Ausführungsform ist die in Reihe zum Transformator geschaltete Spule als Oberschwingungsdrossel ausgeführt. Hierdurch reduziert sich der hochfrequente Störanteil der Ausgangsspannung weiter, da die Streuinduktivität der Oberschwingungsdrossel mit der parasitären Koppelkapazität des Transformators einen zusätzlichen Tiefpass bildet.

In einer weiteren vorteilhaften Ausführungsform ist der Transformator als Spartransformator ausgeführt. In dieser kostengünstigen Variante sind Primär- und Sekundärspule durch ein und dieselbe Spule, bzw. Teile derselben, gebildet.

In einer weiteren vorteilhaften Ausführungsform ist der Transformator nicht vorhanden, sind die zumindest zwei Dioden als zumindest ein Brückengleichrichter mit zumindest vier Dioden ausgeführt und ist die Vollbrückenschaltung an den zumindest einen Brückengleichrichter angeschlossen. Sofern keine Trennung zwischen Primär- und Sekundärseite gefordert ist, kann der Transformator auch ganz entfallen. Dieses Ausführungsbeispiel kann auch als quasiresonanter Tiefsetzsteller bezeichnet werden. Auch hierbei können die Umschwingkapazitäten vor dem Brückengleichrichter oder parallel zu jeder Diode angeordnet sein.

In einer weiteren vorteilhaften Ausführungsform wird die Ausgangsspannung über eine gleichzeitige Änderung der Phasenverschiebung und der Frequenz geregelt.

In einer weiteren vorteilhaften Ausführungsform wird der in Reihe zum Transformator geschaltete Kondensator derart dimensioniert, dass eine Betriebsfrequenz der Vollbrückenschaltung oberhalb einer Resonanzfrequenz eines aus einer Streuinduktivität des Transformators und den in Reihe zu diesem geschalteten Kondensator und Spule gebildeten Schwingkreises liegt.

In einer weiteren vorteilhaften Ausführungsform wird eine Betriebsfrequenz der Vollbrückenschaltung mit einer Taktfrequenz eines mit der zumindest einen Ausgangsspannung versorgten Verbrauchers synchronisiert. Dadurch kann in vorteilhafter Weise die Schaltfrequenz der Stromversorgung mit der Taktfrequenz z.B. eines A/D-Wandlers zur Messwerterfassung derart synchronisiert werden, dass der deterministische Fehler bspw. durch Mittelung reduziert bzw. vermieden werden kann. Hierzu kann die Taktfrequenz des A/D-Wandlers mit der Schaltfrequenz derart synchronisiert werden, dass die Abtastzeitpunkte bei jedem Messvorgang entweder deterministisch oder stochastisch eingestellt werden. Durch die Synchronisation der Schaltfrequenz mit den Abtastzeitpunkten der Messeinrichtung kann der verbleibende, durch die Stromversorgung erzeugte, deterministische Fehler reduziert werden. Im Anwendungsfall kann so die Genauigkeit der Messung erhöht werden.

Im Folgenden wird die Erfindung anhand der in den FIGuren dargestellten Ausführungsbeispiele näher beschrieben und erläutert. Es zeigen:

FIG 1 ein Blockschaltbild einer Messvorrichtung,
FIG 2 eine erfindungsgemäße Schaltungsanordnung,
FIG 3 Strom-Spannungsverläufe der Schaltungsanordnung,
FIG 4 eine zweite Ausführungsform des Ausgangsgleichrichters,
FIG 5 eine dritte Ausführungsform des Ausgangsgleichrichters,
FIG 6 eine vierte Ausführungsform des Ausgangsgleichrichters,
FIG 7 eine zweite Ausführungsform der Schaltungsanordnung,
FIG 8 eine dritte Ausführungsform der Schaltungsanordnung,
FIG 9 eine erfindungsgemäße Schaltungsanordnung ohne Transformator.

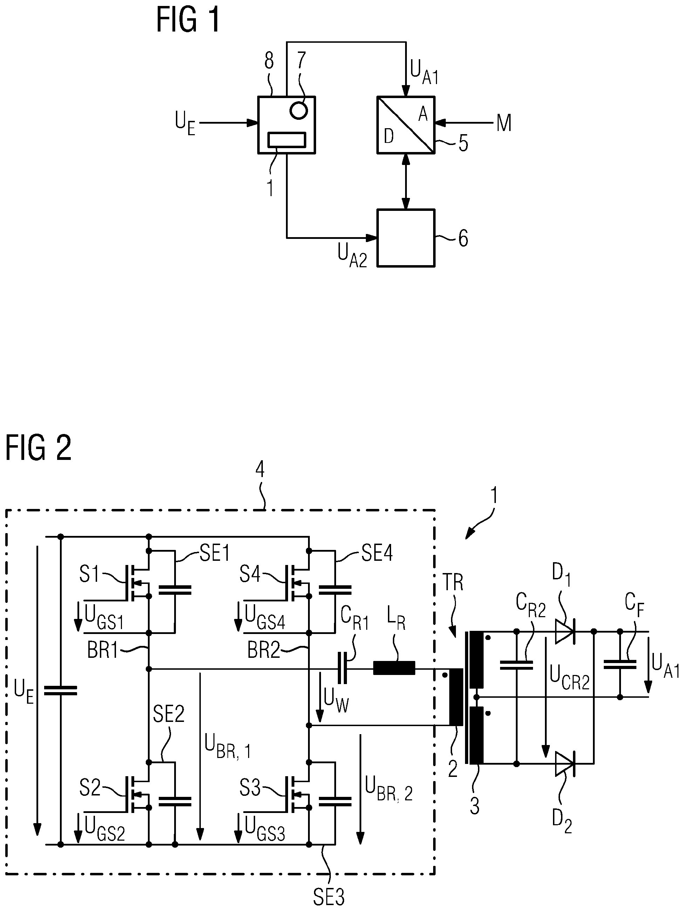

FIG 1 zeigt ein Blockschaltbild einer Messvorrichtung wie beispielsweise eine Analogwerterfassung mit einem A/D-Wandler als Verbraucher 5, der das Signal einer Messgröße M umwandelt. Das Netzteil 8 weist vorteilhafterweise eine erfindungsgemäße Schaltungsanordnung 1 sowie eine erfindungsgemäße Steuerung 7 auf und erzeugt in diesem Beispiel aus einer Eingangsspannung $U_E$ zwei Ausgangsspannungen $U_{A1}$, $U_{A2}$, die zum Einen den Verbraucher 5 und zum Anderen die Steuerung 6 der Messvorrichtung mit Strom versorgen. Die Steuerung 6 kann dabei z.B. als Mikrokontroller, als digitaler Signalprozessor oder als integrierter Schaltkreis - beispielsweise ein FPGA (field programmable gate array) - ausgebildet sein.

Die Qualität der Versorgungsspannung $U_{A1}$, die durch das Schaltnetzteil 8 bereitgestellt wird, ist entscheidend für die erzielbare Messgenauigkeit. Insbesondere sind hochfrequente Störungen problematisch, die einerseits direkt das Messsignal beeinflussen können und andererseits auch über die Versorgungsspannung der analogen Messwerterfassung und des A/D-Wandlers 5 eine fehlerhafte Messwerterfassung verursachen. Ein Problem ist insbesondere die begrenzte Gleichtaktunterdrückung der Versorgungsspannung der Messverstärker bei hoher Frequenz. Durch eine erfindungsgemäße Schaltungsanordnung 1 sowie durch ein erfindungsgemäßes Verfahren zur Erzeugung einer Ausgangsspannung mittels einer solchen Schaltungsanordnung 1 wird die Störaussendung reduziert, wobei das entstehende Störspektrum nur bei bekannten, klar definierten Frequenzen Spektralanteile besitzt.

FIG 2 zeigt eine erfindungsgemäße Schaltungsanordnung 1 mit einem Transformator TR mit einer Primärwicklung 2 und einer Sekundärwicklung 3 und einer Vollbrückenschaltung 4 auf der Primärseite und einem Ausgangsgleichrichter auf der Sekundärseite. Die Schaltung stellt einen multiresonanten Vollbrückenresonanzwandler mit einer Regelung der Ausgangsspannung $U_{A1}$ über eine Phasenverschiebung $\Phi$ zwischen den Spannungen $U_{BR,1}$, $U_{BR,2}$ der beiden Brückenzweige BR1, BR2 bei konstanter Frequenz. Die Schaltungsanordnung 1 ist gewissermaßen eine Weiterentwicklung einer Kombination eines multiresonanten Halbbrückenwandlers mit einem schaltentlasteten Vollbrückenwandler - mit den Schaltentlastungen SE1-SE4 der Schaltelemente S1-S4, die jeweils eine Gate-Source-Spannung $U_{GS1}$-$U_{GS4}$ aufweisen. Der in Serie zum Trafo TR liegende Kondensator $C_{R1}$ ist vorteilhafterweise so dimensioniert, dass die Betriebsfrequenz des Wechselrichters 4 oberhalb der Resonanzfrequenz des aus $C_{R1}$, $L_R$ und der Streuinduktivität des Transformators TR resultierenden Schwingkreises liegt. Der Ausgangsgleichrichter weist neben den Dioden $D_1$, $D_2$ und dem Ausgangskondensator $C_F$ die erfindungsgemäße Umschwingkapazität $C_{R2}$ auf, an der die Spannung $U_{CR2}$ liegt. $U_W$ ist die Differenz der beiden Brückenspannungen $U_{BR,1}$ und

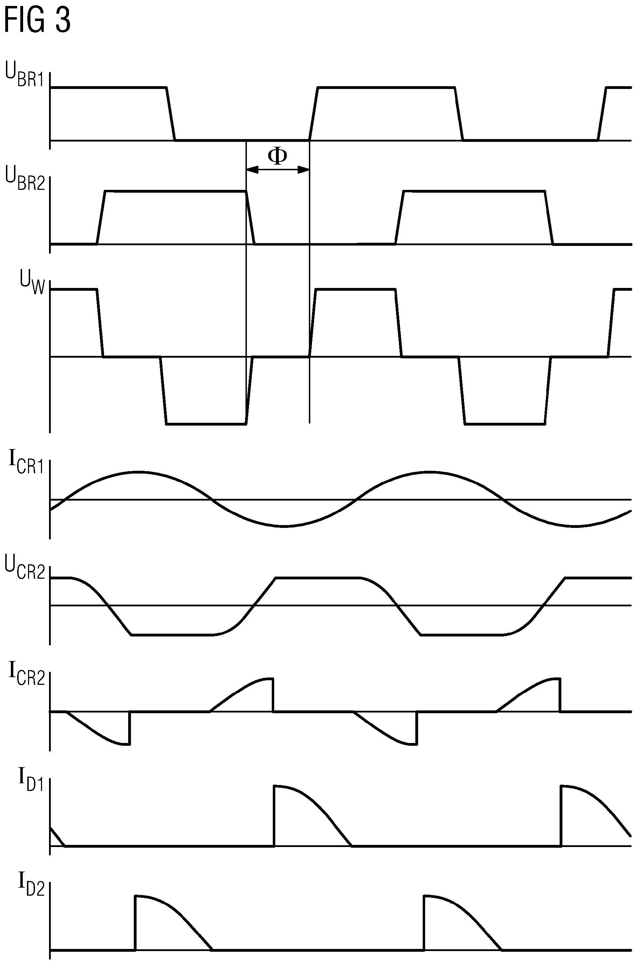

$U_{BR,2}$, $U_E$ ist die Eingangsspannung und $U_{A1}$ die Ausgangsspannung. Die Funktionsweise der Schaltung 1 wird nachfolgend anhand der Spannungs- und Stromverläufe von FIG. 3 erläutert.

FIG 3 zeigt die Strom- und Spannungsverläufe der erfindungsgemäßen Schaltungsanordnung 1 nach FIG 2. Zur Regelung der Ausgangsspannung $U_{A1}$ wird die Phasenverschiebung $\Phi$ zwischen den beiden Spannungen $U_{BR,1}$ und $U_{BR,2}$ variiert. Hierdurch kann die Amplitude des Grundschwingungsanteils $U_{W0}$ der Spannung $U_W$ geregelt werden. Unter Vernachlässigung der Umschaltzeit gilt (mit der Periode T):

$$U_{W0} = U_E * \frac{4}{\pi} * \cos\left(\pi\,\frac{\Phi}{T}\right).$$

Aufgrund der frequenzselektiven Eingangsimpedanz des Resonanzkreises kann hierdurch der Resonanzstrom $I_{CR1}$ (und damit auch der Stromverlauf auf der Sekundärseite) und letztlich auch die Ausgangsspannung $U_{A1}$ geregelt werden. Bei Betrieb nahe der Resonanzfrequenz fließt näherungsweise nur ein (sinusförmiger) Anteil bei der Grundfrequenz

$$I_{CR1,0} = \frac{U_{W0}}{Z_E},$$

wobei $Z_E$ die (effektiv wirksame) Eingangsimpedanz des Lastnetzwerkes ist.

Die Funktion der Kapazität $C_{R2}$ ist, dass sie den Spannungsanstieg an den Ausgangskapazitäten $C_F$ verlangsamt, in dem sie den vom Lastnetzwerk eingeprägten Strom übernimmt, bis sie um den Wert $2*U_{A1}$ umgeladen wird, bevor die Spannung durch Einschalten der Dioden $D_1$, $D_2$ auf den Wert der Ausgangsspannung $U_{A1}$ festgehalten wird (Spannungsverlauf von $U_{CR2}$ in der Figur). Dabei ist der Strom durch die Umschwingkapazität $C_{R2}$ mit $I_{CR2}$ bezeichnet und die Ströme durch die Dioden $D_1$, $D_2$ mit $I_{D1}$ und $I_{D2}$. Ein weiterer Vorteil ist, dass die Dioden $D_1$, $D_2$ wie bei einem lastresonanten Wandler aufgrund der Stromeinprägung durch den Resonanzkreis mit definiertem dI/dt ausschalten. Der wesentliche Vorteil gegenüber den lastresonanten Wandlern ist, dass die Variation der Spannung $U_W$ bei konstanter Frequenz erfolgen kann.

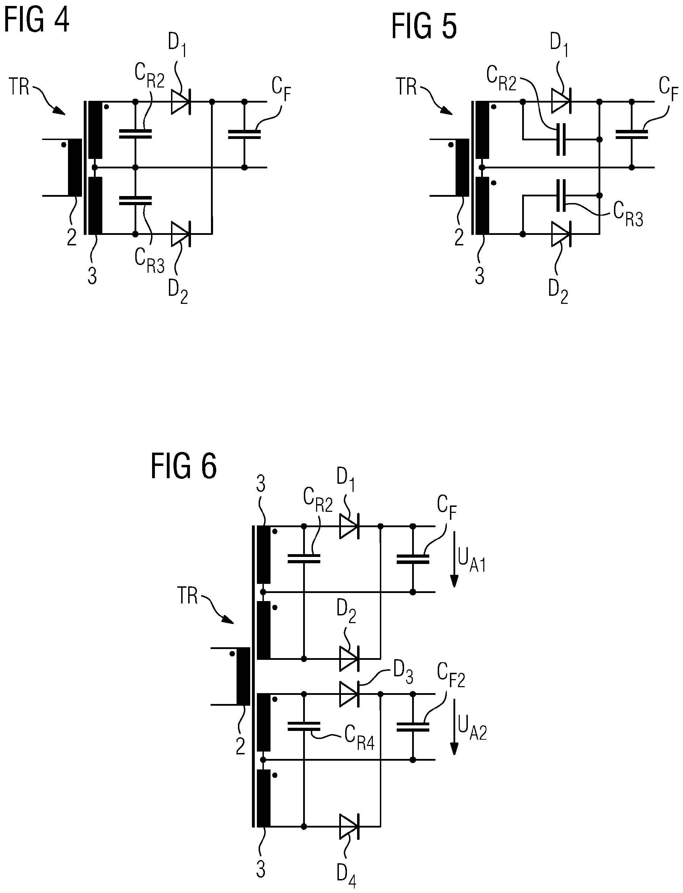

Die Figuren 4 und 5 zeigen weitere Möglichkeiten zur Ausführung der Umschwingkapazität $C_{R2}$, $C_{R3}$ auf der Sekundärseite. FIG 4 zeigt einen Mittelpunktgleichrichter mit zwei Umschwingkapazitäten $C_{R2}$, $C_{R3}$ auf der Sekundärseite, FIG 5 zeigt ebenfalls einen Mittelpunktgleichrichter, aber mit zwei Umschwingkapazitäten $C_{R2}$, $C_{R3}$ parallel zu den Dioden $D_1$, $D_2$ des Gleichrichters.

FIG 6 zeigt eine beispielhafte Ausführung einer sekundärseitigen Beschaltung zur Erzeugung mehrerer Ausgangsspannungen $U_{A1}$, $U_{A2}$. Im dargestellten Beispiel ist dabei die sekundärseitige Beschaltung, wie sie in FIG 2 gezeigt ist, mit den Dioden $D_1$-$D_4$, den Umschwingkapazitäten $C_{R2}$, $C_{R4}$ und den Ausgangskondensatoren $C_F$ und $C_{F2}$ ausgeführt.

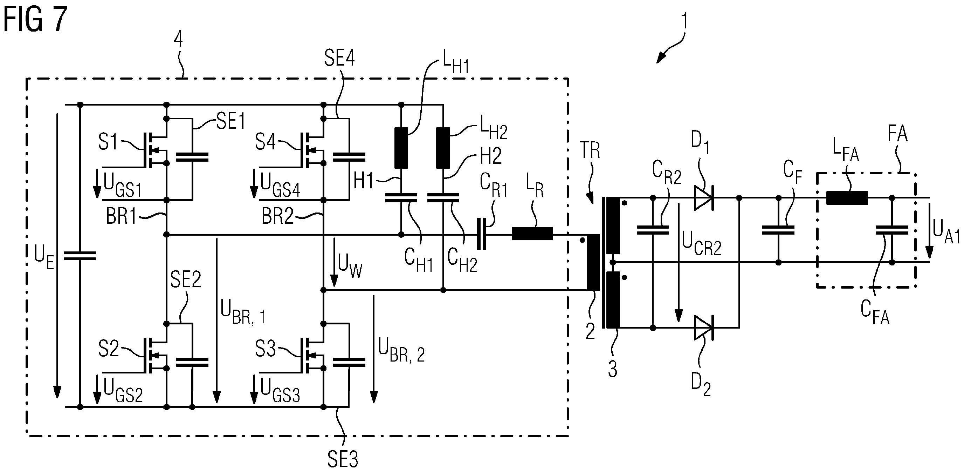

FIG 7 zeigt eine besonders vorteilhafte Ausführungsform der erfindungsgemäßen Schaltungsanordnung 1. Hierbei ist die unter FIG 2 beschriebene Lösung um zwei Entlastungskreise - jeweils mit $L_{H1}$, $C_{H1}$ bzw. $L_{H2}$, $C_{H2}$ - erweitert. Diese Anordnung mit den zusätzlichen Kommutierungseinrichtungen $L_{H1}$, $C_{H1}$ bzw. $L_{H2}$, $C_{H2}$ für jeden Brückenzweig BR1, BR2 ist vorteilhaft, da bei konstanter Betriebsfrequenz und Einschaltzeit die Drosseln $L_{H1}$, $L_{H2}$ so dimensioniert werden können, dass der in diesen fließende Blindstrom (dieser hat einen dreieck- bzw. trapezförmigen Zeitverlauf) ausreichend ist, um die parallel zu den Schaltern S1-S4 angeordneten Kapazitäten SE1-SE4 auch dann umzuladen, falls kein oder nur ein sehr geringer Laststrom fließt. Dies ist bei frequenzmodulierten Wandlern üblicherweise nur mit Einschränkungen möglich. (Der gemeinsame Anschluss der beiden Drosseln $L_{H1}$, $L_{H2}$ kann auch auf Masse liegen.)

Als zusätzliche Erweiterung zeigt die Ausführungsform in dieser FIG 7 den Einsatz eines zusätzlichen Ausgangsfilters FA mit Spule $L_{FA}$ und Kondensator $C_{FA}$, um die Gegentaktstörungen am Ausgang zu reduzieren.

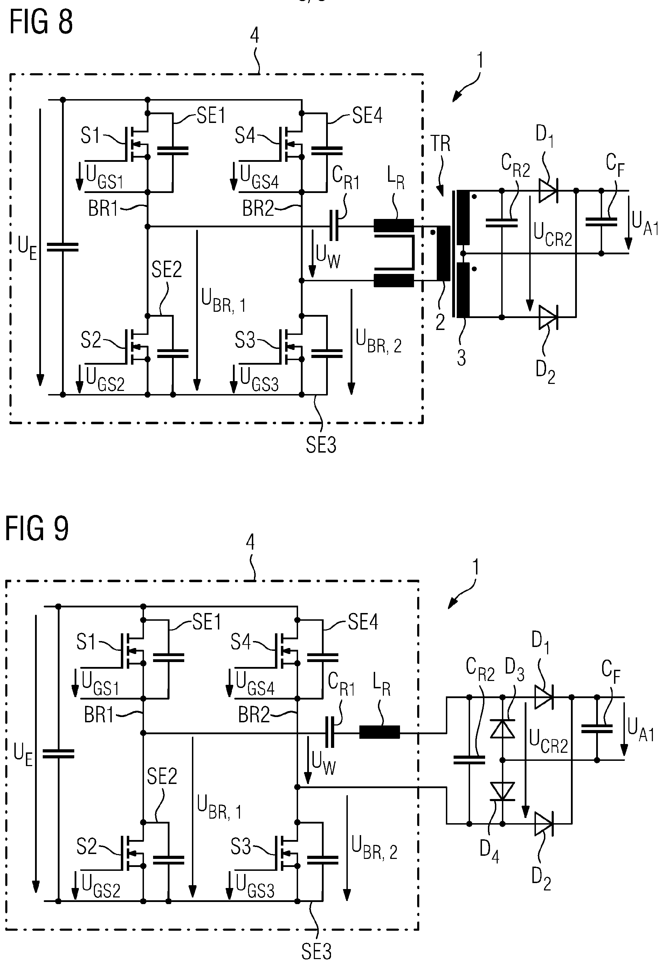

FIG 8 zeigt eine weitere vorteilhafte Ausführungsform der erfindungsgemäßen Schaltungsanordnung 1. Diese entspricht der in FIG 2 gezeigten, wobei die in Reihe zum Transformator TR geschaltete Spule $L_R$ als Oberschwingungsdrossel ausgeführt ist.

FIG 9 zeigt eine Ausführungsform der Schaltungsanordnung 1 ohne Transformator Tr. Um eine solche zu erhalten, wird, ausgehend von einer Schaltungsanordnung 1 mit Transformator TR - im vorliegenden Beispiel wie in FIG 2 gezeigt - der Transformator TR entfernt, die Dioden $D_1$, $D_2$ mit zwei weiteren Dioden $D_3$, $D_4$ zu einem Brückengleichrichter ergänzt, und die Vollbrückenschaltung 4 an den Brückengleichrichter angeschlossen. Die Umschwingkapazität $C_{R2}$ verbleibt dabei an ihrem Ort, also zwischen der nicht mehr vorhandenen Sekundärwicklung 3 und den Dioden $D_1$-$D_4$, und liegt nun also zwischen der Vollbrückenschaltung 4 und dem Brückengleichrichter. Gemäß einer vorteilhaften Ausführungsform können als eine Variante der Schaltungsanordnung dieser FIG 9 auch parallel zu jeder Diode $D_1$-$D_4$ Umschwingkapazitäten angeordnet sein. Die Ausführungsformen ohne Transformator Tr, die auch als quasiresonante Tiefsetzsteller bezeichnet werden können, eignen sich dann, wenn keine galvanische Trennung zwischen Primär- und Sekundärseite gefordert ist.

Zusammenfassend betrifft die Erfindung eine Schaltungsanordnung mit zumindest einem Transformator mit einer Primär- und einer Sekundärwicklung, wobei die Primärwicklung über eine Vollbrückenschaltung mit zwei Brückenzweigen an eine Eingangsspannung anschließbar ist, wobei die Vollbrückenschaltung vier Schaltelemente mit jeweils einer Schaltentlastung sowie in Reihe zum Transformator geschaltet einen Kondensator und eine Spule aufweist, wobei über die Sekundärwicklung und über zumindest zwei Dioden und einen Ausgangskondensator zumindest eine Ausgangsspannung abgreifbar ist und wobei die Ausgangsspannung über eine Phasenverschiebung der zwei Brückenzweige regelbar ist. Um die Anforderung nach einer geringen Störaussendung zu erfüllen wird vorgeschlagen, dass zwischen der Sekundärwicklung und dem Ausgangskondensator zumindest eine Umschwingkapazität angeordnet ist.

**Patentansprüche**

1. Schaltungsanordnung (1) mit zumindest einem Transformator (TR) mit einer Primär- (2) und einer Sekundärwicklung (3), wobei die Primärwicklung (2) über eine Vollbrückenschaltung (4) mit zwei Brückenzweigen (BR1, BR2) an eine Eingangsspannung ($U_E$) anschließbar ist, wobei die Vollbrückenschaltung (4) vier Schaltelemente (S1-S4) mit jeweils einer Schaltentlastung (SE1-SE4) sowie in Reihe zum Transformator (TR) geschaltet einen Kondensator ($C_{R1}$) und eine Spule ($L_R$) aufweist, wobei über die Sekundärwicklung (3) und über zumindest zwei Dioden ($D_1$-$D_4$) und einen Ausgangskondensator ($C_F$, $C_{F2}$) zumindest eine Ausgangsspannung ($U_{A1}$, $U_{A2}$) abgreifbar ist und wobei die Ausgangsspannung ($U_{A1}$, $U_{A2}$) über eine Phasenverschiebung (Φ) der zwei Brückenzweige (BR1, BR2) regelbar ist, wobei zwischen der Sekundärwicklung (3) und dem zumindest einen Ausgangskondensator ($C_F$, $C_{F2}$) zumindest eine Umschwingkapazität ($C_{R2}$, $C_{R3}$, $C_{R4}$) angeordnet ist, wobei zur Reduzierung von hochfrequenten Störanteilen in der Ausgangsspannung ($U_{A1}$, $U_{A2}$) die in Reihe zum Transformator (TR) geschaltete Spule ($L_R$) als Oberschwingungsdrossel ausgeführt ist, **dadurch gekennzeichnet, dass** jeder Brückenzweig (BR1, BR2) zumindest einen Entlastungskreis (H1, H2) mit zumindest einer Drossel ($L_{H1}$, $L_{H2}$) und einem Kondensator ($C_{H1}$, $C_{H2}$) parallel zu einem Schaltelement aufweist.

2. Schaltungsanordnung nach Anspruch 1, wobei die Streuinduktivität der als Oberschwingungsdrossel ausgeführten Spule ($L_R$) mit der parasitären Koppelkapazität des Transformators (TR) einen zusätzlichen Tiefpass bildet.

3. Schaltungsanordnung nach Anspruch 1 oder 2, wobei jeweils eine Umschwingkapazität ($C_{R2}$, $C_{R3}$, $C_{R4}$) zu den zumindest zwei Dioden ($D_1$-$D_4$) parallel geschaltet ist.

4. Schaltungsanordnung nach einem der vorhergehenden Ansprüche, wobei zwischen dem Ausgangskondensator ($C_F$, $C_{F2}$) und mit der Ausgangsspannung ($U_{A1}$, $U_{A2}$) beaufschlagten Ausgängen zumindest ein Ausgangsfilter (FA) aus zumindest einer Spule ($L_{FA}$) und zumindest einem Kondensator ($C_{FA}$) geschaltet ist.

5. Schaltungsanordnung nach einem der vorhergehenden Ansprüche, wobei der Transformator (TR) als Spartransformator ausgeführt ist.

6. Verfahren zur Erzeugung zumindest einer Ausgangsspannung ($U_{A1}$, $U_{A2}$) mittels einer Schaltungsanordnung (1) nach einem der Ansprüche 1 bis 5, wobei die Ausgangsspannung ($U_{A1}$, $U_{A2}$) über eine Phasenverschiebung (Φ) der zwei Brückenzweige (BR1, BR2) geregelt wird.

7. Verfahren nach Anspruch 6, wobei die Ausgangsspannung ($U_{A1}$, $U_{A2}$) über eine gleichzeitige Änderung der Phasenverschiebung und der Frequenz geregelt wird.

8. Verfahren nach Anspruch 6 oder 7, wobei der in Reihe zum Transformator (TR) geschaltete Kondensator ($C_{R1}$) derart dimensioniert wird, dass eine Betriebsfrequenz der Vollbrückenschaltung (4) oberhalb einer Resonanzfrequenz eines aus einer Streuinduktivität des Transformators (TR) und den in Reihe zu diesem geschalteten Kondensator ($C_{R1}$) und Spule ($L_R$) gebildeten Schwingkreises liegt.

9. Verfahren nach einem der Ansprüche 6 bis 8, wobei eine Betriebsfrequenz der Vollbrückenschaltung (4) mit einer Taktfrequenz zumindest eines mit der zumindest einen Ausgangsspannung ($U_{A1}$, $U_{A2}$) versorgten Verbrauchers (5) synchronisiert wird.

10. Steuerung (7) für eine Schaltungsanordnung (1) nach einem der Ansprüche 1 bis 5 mit Mitteln zur Durchführung eines Verfahrens nach einem der Ansprüche 6 bis 9.

11. Schaltnetzteil (8) mit einer Schaltungsanordnung (1) nach einem der Ansprüche 1 bis 5 und einer Steuerung (7) nach Anspruch 10.

**Claims**

1. Circuit arrangement (1) with at least one transformer (TR) with a primary (2) and secondary winding (3), wherein the primary winding (2) can be connected to an input voltage ($U_E$) via a full bridge circuit (4) with two bridge branches (BR1, BR2), wherein the full bridge circuit (4) has four circuit elements (S1-S4), each with a circuit discharge (SE1-SE4), and also a capacitor ($C_{R1}$) and a coil ($L_R$) connected in series with the transformer (TR), wherein via the secondary winding (3) and via at least two diodes ($D_1$-$D_4$) and an output capacitor ($C_F$, $C_{F2}$) at least one output voltage ($U_{A1}$, $U_{A2}$) can be tapped, and wherein the output voltage ($U_{A1}$, $U_{A2}$) can be regulated via a phase shift ($\Phi$) of the two bridge branches (BR1, BR2), wherein at least one reversal capacitance ($C_{R2}$, $C_{R3}$, $C_{R4}$) is arranged between the secondary winding (3) and the at least one output capacitor ($C_F$, $C_{F2}$), wherein in order to reduce high-frequency interference components in the output voltage ($U_{A1}$, $U_{A2}$) the coil ($L_R$) connected in series with the transformer (TR) is configured as a harmonic choke, **characterised in that** each bridge branch (BR1, BR2) has at least one discharge circuit (H1, H2) with at least one choke ($L_{H1}$, $L_{H2}$) and one capacitor ($C_{H1}$, $C_{H2}$) in parallel with a circuit element.

2. Circuit arrangement according to claim 1, wherein the leakage inductance of the coil ($L_R$) configured as harmonic choke forms an additional low pass together with the parasitic coupling capacitance of the transformer (TR).

3. Circuit arrangement according to claim 1 or 2, wherein a reversal capacitance ($C_{R2}$, $C_{R3}$, $C_{R4}$) is connected in parallel with the at least two diodes ($D_1$-$D_4$) in each case.

4. Circuit arrangement according to one of the preceding claims, wherein at least one output filter (FA) consisting of at least one coil ($L_{FA}$) and at least one capacitor ($C_{FA}$) is connected between the output capacitor ($C_F$, $C_{F2}$) and outputs to which the output voltage ($U_{A1}$, $U_{A2}$) is applied.

5. Circuit arrangement according to one of the preceding claims, wherein the transformer (TR) is configured as an autotransformer.

6. Method for generating at least one output voltage ($U_{A1}$, $U_{A2}$) by means of a circuit arrangement (1) according to one of claims 1 to 5, wherein the output voltage ($U_{A1}$, $U_{A2}$) is regulated via a phase shift ($\Phi$) of the two bridge branches (BR1, BR2).

7. Method according to claim 6, wherein the output voltage ($U_{A1}$, $U_{A2}$) is regulated via a simultaneous change in the phase shift and the frequency.

8. Method according to claim 6 or 7, wherein the capacitor ($C_{R1}$) connected in series with the transformer (TR) is dimensioned in such a way that an operating frequency of the full bridge circuit (4) lies above a resonant frequency of an oscillating circuit formed by a leakage inductance of the transformer (TR) and the capacitor ($C_{R1}$) and coil ($L_R$) connected in series with said transformer (TR).

9. Method according to one of claims 6 to 8, wherein an operating frequency of the full bridge circuit (4) is synchronised with a clock frequency of at least one consumer (5) supplied by the at least one output voltage ($U_{A1}$, $U_{A2}$).

10. Controller (7) for a circuit arrangement (1) according to one of claims 1 to 5 with means for performing a method according to one of claims 6 to 9.

11. Switched-mode power supply (8) with a circuit arrangement (1) according to one of claims 1 to 5 and a controller (7) according to claim 10.

## Revendications

1. Montage (1), comprenant au moins un transformateur (TR), ayant un enroulement (2) primaire et un enroulement (3) secondaire, une tension ($U_E$) d'entrée pouvant être appliquée à l'enroulement (2) primaire par un montage (4) en pont complet, ayant deux branches (BR1, BR2) de pont, le montage (4) en pont complet ayant quatre éléments (S1 à S4) de commutation, ayant chacun une décharge (SE1 à SE4), ainsi que, monté en série au transformateur (TR), un condensateur ($C_{R1}$) et une bobine ($L_R$), dans lequel, par l'enroulement (3) secondaire et par au moins deux diodes ($D_1$ à $D_4$) et un condensateur ($C_F$, $C_{F2}$) de sortie, au moins une tension ($U_{A1}$, $U_{A2}$) de sortie peut être prélevée et dans lequel la tension ($U_{A1}$, $U_{A2}$) de sortie est réglable par un déphasage ($\phi$) des deux branches (BR1, BR2) du pont, dans lequel au moins une capacité ($C_{R2}$, $C_{R3}$, $C_{R4}$) d'oscillation est montée entre l'enroulement (3) secondaire et le au moins un condensateur ($C_F$, $C_{F2}$) de sortie, dans lequel, pour réduire des proportions de courant de haute fréquence dans la tension ($U_{A1}$, $U_{A2}$) de sortie, la bobine ($L_R$), montée en série avec le transformateur (TR), est réalisée en bobine de self d'harmonique, **caractérisé en ce que** chaque branche (BR1, BR2) du pont a au moins un circuit (H1, H2) de décharge ayant au moins une bobine ($L_{H1}$, $L_{H2}$) de self et un condensateur ($C_{H1}$, $C_{H2}$) monté en parallèle à un élément de commutation.

2. Montage suivant la revendication 1, dans lequel l'inductance de fuite de la bobine ($L_R$) réalisée en bobine de self d'harmonique forme, avec la capacité de couplage parasitaire du transformateur (TR), un passe-bas supplémentaire.

3. Montage suivant la revendication 1 ou 2, dans lequel respectivement une capacité ($C_{R2}$, $C_{R3}$, $C_{R4}$) d'oscillation est montée en parallèle aux au moins deux diodes ($D_1$ à $D_4$).

4. Montage suivant l'une des revendications précédentes, dans lequel, entre le condensateur ($C_F$, $C_{F2}$) de sortie et des sorties, auxquelles est appliquée la tension ($U_{A1}$, $U_{A2}$) de sortie, est monté au moins un filtre (FA) de sortie composé d'au moins une bobine ($L_{FA}$) et d'au moins un condensateur ($C_{FA}$).

5. Montage suivant l'une des revendications précédentes, dans lequel le transformateur (TR) est réalisé sous la forme d'un autotransformateur.

6. Procédé de production d'au moins une tension ($U_{A1}$, $U_{A2}$) de sortie au moyen d'un montage (1) suivant l'une des revendications 1 à 5, dans lequel on régule la tension ($U_{A1}$, $U_{A2}$) de sortie par un déphasage ($\phi$) des deux branches (BR1, BR2) du pont.

7. Procédé suivant la revendication 6, dans lequel on régule la tension ($U_{A1}$, $U_{A2}$) de sortie par une variation simultanée du déphasage et de la fréquence.

8. Procédé suivant la revendication 6 ou 7, dans lequel on dimensionne le condensateur ($C_{R1}$) monté en série avec le transformateur (TR), de manière à ce qu'une fréquence de fonctionnement du montage (4) en pont complet se trouve au-dessus d'une fréquence de résonance d'un circuit oscillant formé d'une inductance de fuite du transformateur (TR) et du condensateur ($C_{R1}$) et de la bobine ($L_R$) montée en série avec celui-ci.

9. Procédé suivant l'une des revendications 6 à 8, dans lequel on synchronise une fréquence de fonctionnement du montage (4) en pont complet par une fréquence d'horloge d'au moins un consommateur (5) alimenté par la au moins une tension ($U_{A1}$, $U_{A2}$) de sortie.

10. Commande (7) pour un montage (1) suivant l'une des revendications 1 à 5, comprenant des moyens pour effectuer un procédé suivant l'une des revendications 6 à 9.

11. Alimentation (8) à découpage ayant un montage (1) suivant l'une des revendications 1 à 5 et une commande (7) suivant la revendication 10).

## FIG 1

## FIG 2

# FIG 3

FIG 4

FIG 5

FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69510874 T2
- DE 102005030601 A1
- US 6246599 B1